# DEMANDE DE BREVET EUROPEEN

(11) **EP 3 106 413 A1**
(43) Date de publication de la demande: **21.12.2016**
(21) Numéro de dépôt: 16174490.9
(22) Date de dépôt: 15.06.2016
(51) Int. Cl.: B65G 47/91, B65G 47/90

(54) **POSITIONNEMENT ET TRANSFERT DE PRODUITS**

(30) Priorité: 18.06.2015 FR 1555566
(71) Demandeur: C.E.R.M.E.X. CONSTRUCTIONS ETUDES ET RECHERCHES DE MATERIELS POUR L'EMBALLAGE D'EXPEDITION, 21910 Corcelles-les-Cîteaux (FR)
(72) Inventeur: GUELAUD, Sébastien, 21910 CORCELLES LES CÎTEAUX (FR); DUVERGEY, Arnaud, 21910 CORCELLES LES CÎTEAUX (FR)
(74) Mandataire: Eltzer, Thomas

(57) **Abrégé**

L'invention a pour objet un dispositif de de positionnement (1) pour saisir et modifier la position, au sein d'une structure support (2) qu'il comprend, d'un ensemble de produits (3) pour une ligne industrielle traitant ces produits (3) à la chaîne, dispositif comprenant, pour au moins un produit (3) à déplacer dans ladite structure support (2), une unité de manoeuvre (4) comportant, d'une part, un bloc (5) mobile interagissant avec ledit au moins un produit (3), et, d'autre part, un actionneur (6) définissant la position dudit bloc (5).

Ce dispositif caractérisé en ce que la au moins une unité de manoeuvre (4) comprend, en outre, une paire de butées (7) de réglage entre lesquelles le bloc (5) circule, sous l'effet de l'actionneur (6), de sorte à déplacer le au moins un produit (3) concerné.

L'invention a aussi pour objet un dispositif de préhension, un procédé de positionnement et un procédé de transfert correspondants.

## Description

La présente invention relève du domaine du traitement de produits à la chaîne dans une ligne industrielle de conditionnement, et a pour objet, d'une part, un dispositif de positionnement ainsi qu'un dispositif de préhension le comprenant, et, d'autre part, les procédés mettant en oeuvre chacun de ces deux dispositifs.

Dans ce domaine, il est nécessaire de positionner correctement les produits, qui peuvent être des consommables, des caisses, des plaques cartonnées mais aussi les produits à conditionner eux-mêmes.

Les produits à conditionner circulent généralement grâce à des convoyeurs, sur la surface supérieure desquels ils sont déposés. Une fois les produits terminés, il reste à les saisir pour les déposer dans une caisse ou autre carton, au cours d'une étape d'encaissage.

Cette situation amène un besoin particulier de positionnement des produits. En effet, ils se positionnent généralement en colonne les uns derrière les autres avant la saisie, et peuvent être en contact. Plusieurs produits successifs sont saisis pour être amenés dans la caisse, et il se peut que leur position respective ait à être adaptée à ladite caisse, notamment dans les cas où elle contient des espaceurs ou croisillons. Dans certaines applications, les produits traités sont ensuite simultanément alimentés dans plusieurs caisses, qui peuvent, en outre, être différentes les unes des autres et contenir des croisillons. Il est alors nécessaire de prévoir un repositionnement des produits qui tienne compte des épaisseurs de paroi des caisses.

La position relative des produits doit donc être changée entre le moment de la saisie, où ils sont positionnées conformément au convoyage et éventuellement aux étapes amont, et le moment de la dépose, où ils sont positionnés conformément au schéma à reproduire dans la caisse. Le préhenseur qui saisit les produits pour les amener dans la caisse est alors généralement aussi apte à modifier la position des produits pendant leur trajet entre les deux zones.

Dans ce cas particulier de besoin de changement de position entre une zone de saisie et une zone de dépose, on connait par exemple FR2971497 qui propose une tête de préhension munie d'un ensemble de blocs présentant chacun un moyen de préhension pour saisir un produit. Les blocs sont mobiles dans la tête de préhension sous l'effet d'un jeu d'actionneurs, avec un actionneur par bloc. L'amplitude du mouvement du bloc entre la saisie et la dépose est réglée en ajustant la position du bloc le long de la tige de chaque actionneur.

Un des inconvénients de cette installation est que le réglage est fastidieux et que la tête est peu versatile. Il est difficile de l'adapter à de nouveaux formats. En outre, chaque actionneur agit entre deux blocs adjacents, et sorte que le réglage n'est que relatif, et donc peu ergonomique.

Il existe donc un besoin dans ce domaine pour des solutions de repositionnement de produits avec un réglage facilité.

Pour ce faire, l'invention propose essentiellement de prévoir, pour chaque bloc associé à un produit à repositionner, deux butées, chacune associée à l'une des positions du bloc, l'actionneur agissant sur le bloc pour le déplacer contre l'une ou l'autre de ces butées.

L'invention a ainsi pour objet un dispositif de positionnement pour saisir et modifier la position, au sein d'une structure support qu'il comprend, d'un ensemble de produits pour une ligne industrielle traitant ces produits à la chaîne, dispositif comprenant, pour au moins un produit à déplacer dans ladite structure support, une unité de manoeuvre comportant, d'une part, un bloc mobile interagissant avec ledit au moins un produit, et, d'autre part, un actionneur définissant la position dudit bloc.

Ce dispositif est caractérisé en ce que
la au moins une unité de manoeuvre comprend, en outre, une paire de butées de réglage entre lesquelles le bloc circule, sous l'effet de l'actionneur, de sorte à déplacer le au moins un produit concerné.

L'invention a aussi pour objet un dispositif de préhension utilisant un tel dispositif de positionnement, à savoir un dispositif de préhension pour prendre simultanément plusieurs produits dans au moins une colonne convoyée dans une ligne industrielle et les déposer ensuite pour un conditionnement en fardeau ou par encaissage dans un récipient du type caisse.

Ce dispositif de préhension est caractérisé en ce qu'il comprend un dispositif de positionnement décrit ci-dessus, prévu pour être monté sur un manipulateur qui déplace le dispositif de préhension entre une zone de prise, où les produits sont pris, et une zone de dépose, où ils sont déposés après avoir été repositionnés au sein du dispositif de positionnement, le bloc mobile de la au moins une unité de manoeuvre portant au moins un moyen de préhension pour saisir au moins un produit.

L'invention a aussi pour objet une méthode mise en oeuvre par ce dispositif positionnement, à savoir un procédé pour repositionner des produits dans une ligne industrielle traitant ces produits à la chaîne, à l'aide d'un dispositif de positionnement tel que défini ci-dessus.

Ce procédé est caractérisé en ce que
le déplacement des produits au sein du dispositif de positionnement s'effectue par le déplacement, le long de premières glissières et entre deux butées réglables, d'au moins un bloc dédié à coopérer avec au moins un produit.

Enfin, l'invention a encore pour objet un procédé de transfert mettant en oeuvre un tel dispositif de préhension et utilisant un tel procédé de positionnement, à savoir un procédé de transfert de produits au sein d'une ligne de traitement où ils sont conditionnés, et ce à l'aide d'un dispositif de préhension défini ci-dessus, lesdits produits étant pris dans une zone de prise et déposés dans une zone de dépose.

Ce procédé est caractérisé en ce qu'il comprend un procédé de repositionnement tel que défini ci-dessus, le déplacement des produits au sein du dispositif de positionnement étant mis en oeuvre lors du transfert des produits depuis la zone de prise jusqu'à la zone de dépose.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 montre le principe général avec un bloc pour traiter un produit ;
- la figure 2 montre une application sous forme de robot préhenseur d'encaissage ;
- les figures 3 et 4 montrent un dispositif de positionnement respectivement dans les deux configurations extrêmes possibles.

L'invention a donc tout d'abord comme objet un dispositif de positionnement 1 pour saisir et modifier la position, au sein d'une structure support 2 qu'il comprend, d'un ensemble de produits 3 pour une ligne industrielle traitant ces produits 3 à la chaîne, dispositif comprenant, pour au moins un produit 3 à déplacer dans ladite structure support 2, une unité de manoeuvre 4 comportant, d'une part, un bloc 5 mobile interagissant avec ledit au moins un produit 3, et, d'autre part, un actionneur 6 définissant la position dudit bloc 5.

Les produits 3 à traiter peuvent être, par exemple, des bouteilles, flacons, ou autres, dans une ligne de conditionnement au sein de laquelle ils sont traités à la chaîne pour un encaissage, mise en fardeaux, puis palettisation, etc. Les produits 3 peuvent aussi être des caisses ou autres contenants, mises en forme par un module de formage de caisse carton, et amenées ensuite dans la zone d'encaissage par un préhenseur adapté. Le dispositif de conditionnement 1 peut donc, de façon non limitative, servir à saisir et extraire des produits 3 d'un flux ou stock pour les déposer ailleurs, avec une configuration géométrique prédéfinie pour la prise et pour la dépose.

De façon générale, le dispositif de positionnement 1 peut être mobile ou non, en ce sens que sa structure support 2, au sein de laquelle les produits 3 sont déplacés, peut elle-même être déplaçable ou non. Un éventuel dispositif additionnel peut par exemple apporter les produits 3 au dispositif de positionnement 1, dans les cas où il est immobile. Dans d'autres réalisations, le dispositif de positionnement 1 est déplaçable et permet ainsi non seulement de bouger les produits 3 par rapport à sa structure support 2, mais aussi de déplacer entre deux zones l'ensemble des produits 3, en particulier pour un fonction de transfert ou encaissage.

L'actionneur 6 a donc pour effet de déplacer le bloc 5 au sein de la structure support 2, le bloc 5 entraînant à son tour au moins un produit 3. Les produits 3 bougent donc au sein du dispositif de positionnement 1 lors de sa manoeuvre.

Selon l'invention, la au moins une unité de manoeuvre 4 comprend, en outre, une paire de butées 7 de réglage entre lesquelles le bloc 5 circule, sous l'effet de l'actionneur 6, de sorte à déplacer le au moins un produit 3 concerné, notamment, dans des applications du type dispositif de préhension 17, une paire de butées 7 comprenant, d'une part, une butée de prise, qui définit la position du bloc 5 à l'occasion de la prise des produits 3, et, d'autre part, une butée de dépose, qui définit la position du bloc 5 à l'occasion de la dépose des produits 3.

Lors de l'action du dispositif de positionnement 1, un bloc 5 bouge donc entre deux butées 7, sous l'effet de l'actionneur 6, qui s'appuie dans la structure support 2. Comme il sera encore décrit plus loin, c'est donc la position de chacune des butées 7 qui définit les deux positions extrêmes du bloc 5 correspondant : celle nécessaire pour saisir les produits 3 comme ils arrivent, et celle souhaitée pour la dépose ultérieure des produits 3.

Selon une caractéristique additionnelle possible, la structure support 2 comporte, d'une part, des premières glissières 8 sur lesquelles le bloc 5 de la au moins une unité de manoeuvre 4 est monté mobile entre deux positions délimitées par l'une des butées 7 de réglage à chaque fois, et, d'autre part, des deuxièmes glissières 9 sur lesquelles est montée la paire de butées 7 correspondante. De façon générale, les premières glissières 8 peuvent être formées d'une seule et même pièce, les deuxièmes glissières 9 peuvent elles aussi être formées d'une seule et même pièce, un seul et même élément formant aussi par exemple tant les premières glissières 8 que les deuxièmes glissières 9, ce qui peut amener des simplifications structurelles considérables.

Les premières glissières 8 et deuxièmes glissières 9 sont linéaires et parallèles, les blocs 5 étant montés glissant sur les premières glissières 8. En utilisation, les butées 7 sont fixes, alors qu'elles sont mobiles et déplaçables le long des deuxièmes glissières 9 lors des étapes de réglages préliminaires en position.

Selon une autre caractéristique additionnelle possible du dispositif positionnement, il comprend une pluralité d'unités de manoeuvre 4, pour pouvoir traiter simultanément plusieurs produits 3, chaque unité de manoeuvre 4 étant dédiée au déplacement d'au moins un produit 3, les blocs 5 étant tous montés sur les premières glissières 8, les paires de butées 7 de réglage étant toutes montées sur les deuxièmes glissières 9.

Les premières glissières 8 et les deuxièmes glissières 9 sont donc linéaires, les blocs 5 étant ainsi alignés le long de la direction dans laquelle s'étendent les premières glissières 8, chaque bloc 5 pouvant éventuellement être apte à traiter une pluralité de produits 3 répartis perpendiculairement à cette direction, notamment avec un moyen de préhension 10 par produit 3, les moyens de préhension 10 s'alignant donc, pour un bloc 5, perpendiculairement à la direction des premières glissières 8.

Selon une autre caractéristique additionnelle possible, la au moins une unité de manoeuvre 4 comprend, en outre, pour chaque butée 7, un bloqueur 11, contrôlant le verrouillage en position de ladite butée 7, en particulier un bloqueur 11 sous forme de vérin pneumatique. Ce bloqueur 11 permet de verrouiller la butée 7 dans sa position sur les deuxièmes glissières 9, de sorte qu'elle reste immobile malgré la poussée contre elle du bloc 5, sous l'effet de l'actionneur 6. Le bloqueur 11 est contrôlé, et déverrouillé pour permettre une phase de réglage au cours de laquelle la butée 7 correspondante est déplacée le long de la deuxième glissière 8.

Selon une autre caractéristique additionnelle possible, l'actionneur 6 de la au moins une unité de manoeuvre 4 prend la forme d'un vérin à cylindre 12 et piston 13, bistable entre deux positions extrêmes de piston 13 sorti ou piston 13 rentré, qui sont définies par les obstacles qui s'opposent au mouvement du piston 13, notamment par les butées 7 qui bloquent le mouvement du bloc 5 qu'entraîne l'actionneur 6. L'actionneur 6 n'est donc pas lui-même contrôlé en position, mais est tout simplement alimenté en pression jusqu'à ce qu'une surface de butée s'oppose à la suite de son mouvement.

Dans certains modes de réalisations, l'actionneur 6 de la au moins une unité de manoeuvre 4 prend la forme d'un vérin à cylindre 12 et piston 13, l'un parmi le cylindre 12 et le piston 13 étant assujetti au bloc 5 correspondant, l'autre étant assujetti à l'une des deux butées 7, notamment l'éventuelle butée de dépose.

Selon une autre caractéristique additionnelle possible du dispositif de préhension 1, il comprend, en outre, un moyen de réglage 14 pour déplacer au moins une butée 7 de la paire de butées 7 de l'au moins une unité de manoeuvre 4, de sorte à régler l'amplitude du mouvement du bloc 5 correspondant entre les deux butées 7, le moyen de réglage 14 présentant notamment un chariot 15 monté sur des troisièmes glissières 16, les butées 7, d'une part, et le chariot 15, d'autre part, étant conçus pour une coopération géométrique permettant au chariot 15 d'entraîner les butées 7 dans son propre mouvement.

Le chariot 15 a un mouvement contrôlé le long des troisièmes glissières 16, parallèles aux premières et deuxièmes glissières 8, 9.

L'invention concerne aussi une utilisation d'un tel dispositif de positionnement 1, sous la forme d'un dispositif de préhension 17. L'invention a ainsi aussi pour objet un dispositif de préhension 17 pour prendre simultanément plusieurs produits 3 dans au moins une colonne convoyée dans une ligne industrielle et les déposer ensuite pour un conditionnement en fardeau ou par encaissage dans un récipient du type caisse 20.

Selon l'invention, ce dispositif de préhension 17 comprend un dispositif de positionnement 1 tel que décrit ci-dessus, prévu pour être monté sur un manipulateur 18 qui déplace le dispositif de préhension 17 entre une zone de prise, où les produits 3 sont pris, et une zone de dépose, où ils sont déposés après avoir été repositionnés au sein du dispositif de positionnement 1, le bloc 5 mobile de la au moins une unité de manoeuvre 4 portant au moins un moyen de préhension 10 pour saisir au moins un produit 3. Un moyen de préhension 10 est par exemple une pince ou une ventouse, notamment plusieurs pinces ou ventouses décalées transversalement pour traiter plusieurs produits 3, éventuellement montées sur des navettes coulissantes, permettant ainsi de bouger les produits 3, au sein du dispositif de préhension 17, non seulement le long de la direction dans laquelle s'étend la première glissière 8 qui dirige et guide le mouvement du bloc 5 sous l'effet de l'actionneur 6, mais aussi dans une direction perpendiculaire, grâce à ces navettes.

Le dispositif de préhension 17 est ainsi amené au-dessus des produits 3 en attente dans la zone de prise après ou pendant leur convoyage, saisit les produits 3 grâce aux moyens de préhension 10, puis les relâche en zone de dépose. Entre les deux, l'agencement des produits 3 est modifié pour correspondre à celui qu'ils doivent présenter pour l'encaissage, tenant compte des éventuelles différences entre les caisses 20 à remplir, en termes de dimensions et espacement notamment.

L'invention a aussi pour objet un procédé mettant en oeuvre le dispositif de positionnement tel que décrit ci-dessus, à savoir un procédé pour repositionner des produits 3 dans une ligne industrielle traitant ces produits 3 à la chaîne, à l'aide d'un dispositif de positionnement 1 tel que décrit ci-dessus. Ce traitement à la chaîne peut être un conditionnement desdits produits 3, ou au moins un usage de ces produits 3 pour un conditionnement.

Selon l'invention, le déplacement des produits 3 au sein du dispositif de positionnement 17 s'effectue par le déplacement, le long de premières glissières 8 et entre deux butées 7 réglables, d'au moins un bloc 5 dédié à coopérer avec au moins un produit 3. La possibilité de réglage en position de chacune des butées 7 indépendamment contribue à la facilité d'usage et à la versatilité de l'ensemble, qui peut alors très facilement être adapté pour traiter des formats différents.

Selon une caractéristique additionnelle possible du procédé, il comprend, en outre, une étape préliminaire de réglage consistant essentiellement à modifier la position, le long de deuxièmes glissières 9 sur lesquelles elle est montée, d'au moins une butée 7 d'au moins une paire de butées 7 entre lesquelles évolue un ou le bloc 5. Ce changement de position peut être fait de façon automatisée et donc contrôlable avec précision sans nécessiter d'intervention directe d'un opérateur au niveau des butées 7 elles-mêmes.

Dans certains modes de réalisation possibles, le réglage revient à déverrouiller en position la butée 7 à régler, puis à la repositionner le long des deuxièmes glissières 9, puis à la verrouiller à nouveau en position, une fois qu'elle a été positionnée au bon endroit, le verrouillage de la butée 7 dépendant notamment d'un bloqueur 11 du type bloqueur pneumatique.

L'invention a aussi pour objet un procédé mettant en oeuvre le dispositif de préhension tel que décrit ci-dessus, à savoir un procédé de transfert de produits 3 au sein d'une ligne de traitement où ils sont conditionnés, et ce à l'aide d'un dispositif de préhension 17 tel que décrit, lesdits produits 3 étant pris dans une zone de prise et déposés dans une zone de dépose, éventuellement dans au moins une caisse 20 disposée au préalable dans la zone de dépose.

Selon l'invention, ce procédé comprend un procédé de repositionnement de produits 3 tel que décrit ci-dessus, le déplacement des produits 3 au sein du dispositif de positionnement 1 étant mis en oeuvre lors du transfert des produits 3 depuis la zone de prise jusqu'à la zone de dépose. Le dispositif de positionnement 1 est bien entendu ensuite retourné en zone de prise pour le cycle suivant. Ce procédé assure donc le déplacement d'un groupe de produit entre deux zones, mais aussi la reconfiguration dudit groupe.

Dans le mode de réalisation illustré aux figures annexées, le dispositif de positionnement 1 présente une structure support 2 sur laquelle l'ensemble des composants principaux est monté. En effet, sur cette structure support 2 sont montées, d'une part, les premières glissières 8, pour les blocs 5, et, d'autre part, les deuxièmes glissières 9, pour les butées 7.

On comprendra bien sûr que tant les premières glissières 8 que les deuxièmes glissières 9 peuvent prendre la forme d'un guidage réalisé en fait d'une seule pièce, voire un seul et même élément pour former en une fois tant les premières glissières 8 que les deuxièmes glissières 9.

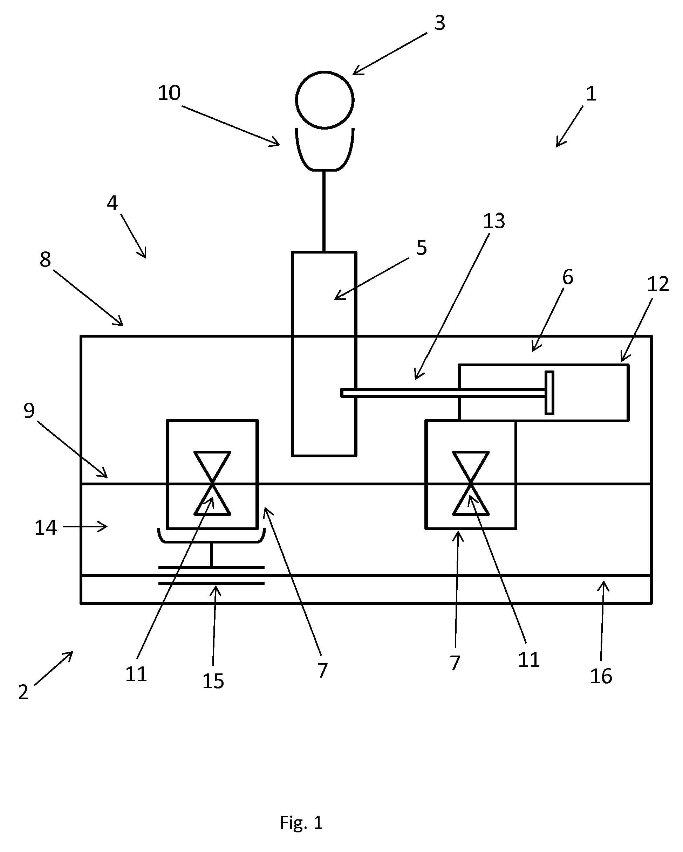

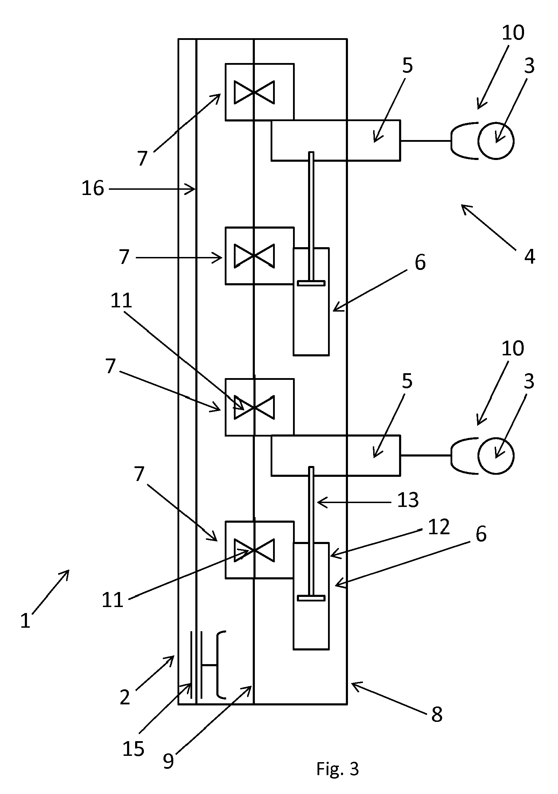

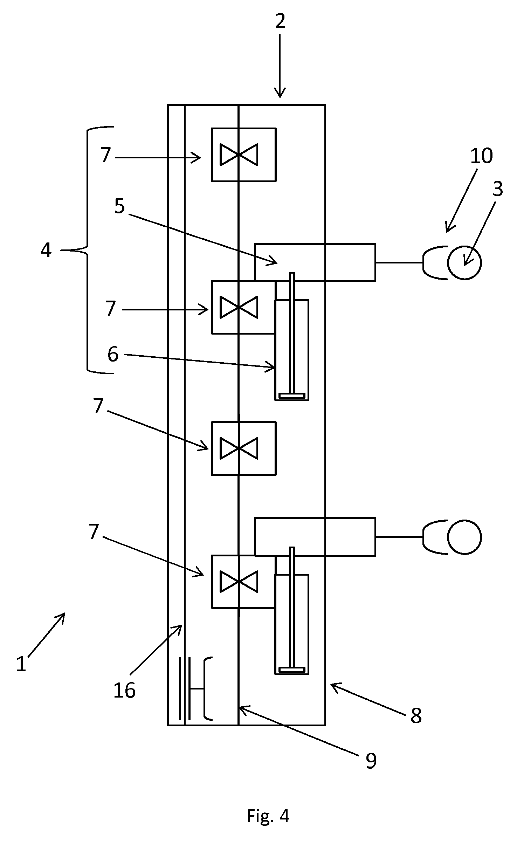

La figure 1 illustre un cas particulier pour coopérer avec un seul produit 3, les figures 3 et 4 montrent des cas où le dispositif de positionnement 8 peut coopérer avec deux produits 3.

De façon générale, il est bien sûr envisageable qu'un bloc 5 soit prévu pour coopérer avec plusieurs produits 3, notamment plusieurs produits 3 répartis perpendiculairement aux premières glissières 8. Les produits 3 peuvent par exemple être des flacons, bouteilles ou autres, circulant initialement dans une direction de convoyage 19, sur un tapis formant une surface essentiellement horizontale. La succession des blocs 5 peut alors être prévue pour s'étendre dans le sens de la direction de convoyage 19, et reproduire initialement l'espacement des produits 3 à cet endroit de prise. Chaque bloc 5 présente donc au moins un moyen de préhension 10 pour saisir un produit 5. Préférablement, chaque bloc 5 présente une pluralité de tels moyens de préhensions 10, qui sont répartis transversalement à la succession des blocs 5. Les moyens de préhension 10 forment alors une matrice, les moyens de préhension 10 d'un même bloc 5 s'étendant transversalement à l'axe dans lequel s'étendent les blocs 5, ce dernier étant aligné avec la direction de convoyage 19 lorsque le dispositif de positionnement 1 arrive pour saisir les produits 3.

Une telle configuration, avec une matrice de moyens de préhension 10 s'étendant dans deux directions, permet ainsi de saisir successivement, avec les moyens de préhension 10 d'un même rang pour les différents blocs 5, des groupes de produits 3, chaque groupe formant un tronçon de la colonne de produits 3 convoyés et une colonne du futur lot. Il est aussi possible, éventuellement, de saisir simultanément tous les groupes et donc un lot, dans les cas particuliers où les produits 3 arrivent déjà en plusieurs colonnes parallèles.

Dans certaines configurations, un bloc 5 porte plusieurs moyens de préhension 10, répartis et mobiles transversalement aux premières et deuxièmes glissières 8, 9. Cette mobilité permet en plus de déplacer les produits 3 transversalement auxdites glissières, et donc transversalement par rapport à la direction de convoyage 19 initiale. Le bloc 5 contient alors les éléments mobiles adéquats, associés aux moyens de préhension 10 qu'il embarque.

On notera aussi que de façon avantageuse, le au moins un moyen de préhension 10 du au moins un bloc 5 peut être escamoté, c'est-à-dire mis hors fonctionnement, pour ajuster alors la capacité ou le format du dispositif de positionnement 1 en termes de nombre produits 3, ou encore de configuration géométrique. Le moyen de préhension 10 escamoté, notamment remonté au coeur de la structure support 2, ne peut alors pas saisir de produit 3. Il est par exemple envisageable de monter le moyen de préhension 10 sur un vérin piloté, dont la position rentrée ou sortie de la tige représente une position escamotée et donc hors fonctionnement dudit moyen de préhension 10.

Ainsi, chaque bloc 5 est associé à au moins un produit 3, et est aussi mobile dans la structure support 2, le long de la direction des premières glissières 8 sur lesquelles les blocs 5 sont montés les uns à côté des autres. Les blocs 5 successifs s'étendent donc dans une direction qui correspond aux premières glissières 8, cette dernière correspondant à la direction de convoyage 19 une fois en vis-à-vis des produits 3 à saisir.

On comprendra donc que, grâce au mouvement des blocs 5 qui les portent, les produits 3 sont déplacés eux aussi au sein de la structure support 2 puisqu'ils subissent, parallèlement aux premières glissières 8, le même déplacement que les blocs 5. Il est donc possible de repositionner les produits 3 dans la structure support 2 et donc aussi de les repositionner les uns par rapport aux autres, si nécessaire.

Le déplacement d'un bloc 5 le long des premières glissières 8 est assuré par un actionneur 6. Cet actionneur 6 est préférablement du type à longueur variable, avec, en fonctionnement une partie fixe par rapport à la structure support 2, le bloc 5 correspondant et à déplacer étant assujetti à une autre partie dudit actionneur 6.

L'amplitude du mouvement du bloc 5 déplaçable est délimitée par deux butées 7, entre lesquelles il se déplace sous l'effet de l'actionneur 6. Ce dernier a la particularité d'être bistable en ce sens qu'il déplace le bloc 5 jusqu'à l'arrivée à une butée et n'assure donc pas lui-même la position finale du bloc 5. C'est le changement de position d'une butée 7, de l'autre, ou des deux, qui modifie les positions extrêmes entre lesquelles circule le bloc 5 correspondant.

L'actionneur 6, associé à un bloc 5 particulier, est préférablement du type pneumatique commandé par un distributeur bistable, fournissant la pression dans l'une ou l'autre chambre dudit actionneur 6.

Le bloc 5 évolue donc entre ces deux butées 7 pour repositionner les produits 3. La position du bloc 5 contre l'une d'elle représente la position qu'il doit avoir avant de repositionner les produits 3, en particulier pour les saisir en reproduisant le pas qu'ils présentent dans la direction de convoyage 19. La position du bloc 5 contre l'autre butée 7 représente la position qu'il doit avoir une fois les produits 3 repositionnés. Dans une application particulière où la structure support 2 est montée pour saisir des produits 3 qui circulent et les amener dans au moins une caisse 20 pour un conditionnement, la butée 7 contre laquelle doit se trouver le bloc 5 pour saisir les produits 3 est appelée butée de prise, alors que la butée 7 contre laquelle se trouve le bloc 5 après repositionnement est appelée butée de dépose. Lorsque le au moins un bloc 5 est contre la butée de dépose, le au moins un produit 3 correspondant se trouve dans la position attendue pour qu'il soit déposé.

On comprend qu'en fonctionnement, les butées 7 sont fixes par rapport à la structure support 2. Montées sur des deuxièmes glissières 9, elles peuvent être déplacées dans une phase de réglage pour modifier l'une ou l'autre des positions que doit prendre le bloc 5 correspondant à l'occasion de la prise ou de la dépose de produit 3.

Comme dans les figures attachées, l'actionneur 6 peut être directement fixé sur l'une des butées 7, il suit ainsi naturellement les réglages en position. L'actionneur 6 présente un corps ou cylindre 12 dans lequel circule un piston 13. Le cylindre 12 est alors fixé à une butée 7, soit la butée de dépose, soit la butée de prise, alors que le piston 13 est attaché au bloc 5, ce qui simplifie la construction et permet la réalisation d'un module autonome. Bien entendu d'autres formes de montages sont possibles, comme la fixation du cylindre 12 au corps 5 mobile et la fixation complémentaire du piston 13 à une butée 7.

Ainsi, l'amplitude du mouvement de chaque bloc 5 peut être réglée indépendamment et de manière très facile, puisqu'il suffit de déplacer l'une, l'autre, ou les deux butées 7 entre lesquelles navigue le bloc 5 en utilisation. Les butées 7 ont donc une position fixe mais réglable dans la structure support 2, sur les deuxièmes glissières 9. Une fois réglé en position, un bloqueur 11 est mis en oeuvre. Un tel bloqueur 11 est associé à au moins une butée 7 et verrouille sa position le long des deuxièmes glissières 9. Le bloqueur 11 est verrouillé par défaut et c'est l'apport d'énergie qui le déverrouille. Après avoir placé la butée 7 à l'endroit souhaité, le bloqueur 11 associé la verrouille en position pour éviter toute autre possibilité de mouvement. Naturellement, en vue d'une étape de réglage et donc d'un changement de position de la butée 7, le bloqueur 11 associé est manoeuvré pour déverrouiller la butée 7 en position pour lui permettre d'être déplacée.

Comme le montre la figure 1, le dispositif de positionnement 1 est muni de troisièmes glissières 16 sur lesquelles circule un chariot 15 qui peut coopérer avec les butées 7 pour, une fois qu'elles sont libres en position le long des deuxièmes glissières 9, les déplacer jusqu'à la position souhaitée. Une fois la butée 7 positionnée au bon endroit, le bloqueur 11 verrouille la butée 7. Le réglage peut ensuite être effectué de la même manière pour une autre butée 7. De façon générale, le chariot 15 coopère avec au moins une butée 7 pour l'entraîner en déplacement. Le chariot 15 est donc entraîné en déplacement le long des troisièmes glissières 16 à l'occasion de l'étape de réglage éventuellement préliminaire à un cycle de fabrication. Les butées 7 ne peuvent donc pas se déplacer de façon autonome, mais sont entraînées dans leur mouvement de réglage par un chariot 15 unique, de position contrôlée. A l'inverse des actionneurs 6 qui sont bistables en position, entre deux surfaces de butée, le chariot 15 peut, sous l'effet d'un entraîneur adéquat, prendre n'importe quelle position le long des troisièmes glissières 16, pour, d'une part, chercher une butée 7, et, d'autre part, accéder à l'endroit où la butée 7 doit être déposée. La liberté de positionnement du chariot 15 de réglage permet un réglage en position qui est simple, et qui puisse se faire pour chaque paramètre du repositionnement des produits 3. Lors de l'étape de réglage, il suffit en effet de déplacer les unes après les autres les butées 7 à l'aide du chariot 15 contrôlé, après un déverrouillage et avant un verrouillage. Le chariot 15 est donc déplacé de façon contrôlée en position lors de l'étape de réglage.

Le chariot 15 est préférablement monté sur un vérin piloté, ce qui lui permet d'être momentanément engagé mécaniquement avec la butée 7 à traiter, grâce à une coopération de forme. Une fois engagés, le chariot 15 entraîne la butée 7 dans son mouvement. L'engagement ou le désengagement du chariot 15 par rapport la butée 7 dépend donc de l'état rentré ou sorti dudit vérin.

Le dispositif de positionnement 1 est ainsi structurellement simple puisque notamment basé essentiellement sur des glissières parallèles entre elles :
- premières glissières 8, pour la circulation des blocs 5 nécessaire pour le repositionnement des produits 3 ;
- deuxièmes glissières 9, pour la circulation des butées 7 nécessaire pour le réglage des amplitudes et position extrêmes des blocs 5 entre elles, et
- troisièmes glissières 16, pour la circulation du chariot 15 de mouvement contrôlé qui entraîne les butées 7 et les repositionne.

Les blocs 5 et les butées 7 peuvent éventuellement être montés ensemble sur un même élément de guidage linéaire du type glissière, qui forme alors de façon non distinctive tant les premières glissières 8 que les deuxièmes glissières 9. Les premières glissières 8 et les deuxièmes glissières 9 sont alors obtenues par un seul et même moyen de guidage linéaire, sur lequel sont montés tant les blocs 5 que les butées 7.

En outre, éventuellement un seul chariot 15 suffit pour déplacer toutes les butées 7. Bien entendu, dans l'absolu, plusieurs chariots 15 peuvent être utilisés simultanément, pour réduire la durée du réglage. De plus, comme le déplacement de chaque bloc 5 est conditionné à chaque fois par deux butées 7 déplaçables, le réglage est indépendant pour chaque bloc 5, et le repositionnement des produits 3 au sein de la structure support 2 permet éventuellement de repositionner les produits 3 entre eux et en changer la configuration géométrique, comme par exemple les regrouper par parties de lot, ou simplement avoir des écartement finaux différents entre les produits 3, etc.

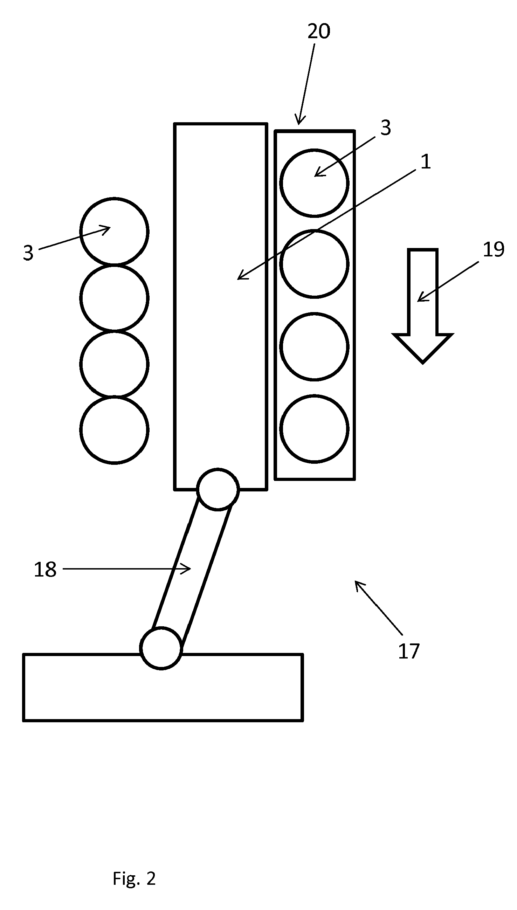

La figure 2 illustre une configuration où le dispositif de positionnement 1 est utilisé comme un dispositif de préhension 17, qui vient saisir des produits 3 du type flacon, bouteille, qui évoluent sur une ligne de conditionnement dans une direction de convoyage 19. Le dispositif de préhension 17 vient se positionner au-dessus des produits 3, à l'arrêt ou en cours de circulation, et les saisit par leur partie supérieure pour les déposer ensuite dans une caisse 20. Dans une telle configuration, le dispositif de positionnement 1 est monté comme un outil à l'extrémité d'un robot manipulateur 18 multi axes. Les produits 3 arrivent sous forme de file continue et le dispositif de préhension 17 sert alors à les saisir et les déposer dans une caisse 20 de conditionnement, boîte ou autre, par exemple obtenue par pliage de plaque cartonnée. Le pas entre les produits 3 qui arrivent dans la direction de convoyage 19 pour être saisis dépend du fonctionnement de la machine en amont. Les produits 3 peuvent ainsi être en contact les uns avec les autres, ou espacés d'un pas plus ou moins régulier.

Pour la saisie des produits 3 qui arrivent, les blocs 5 correspondant sont donc positionnés contre la butée 7 de prise de sorte à reproduire l'espacement des produits 3 à saisir. Une fois les produits 3 saisis grâce aux divers moyens de préhension 10, ils sont déplacés vers la zone de dépose grâce au mouvement du manipulateur 18. Lors de ce trajet, ils sont repositionnés au sein du dispositif de positionnement 1, grâce à l'action des actionneurs 6 qui vont déplacer jusqu'aux butées 7 de dépose les blocs 5 qui transportent les produits 3. L'espacement entre les produits 3 est alors modifié pour être adapté à la configuration que doivent prendre les produits 3 dans la caisse. Après leur repositionnement, le dispositif de préhension 17 dépose tout simplement les produits 3 dans la au moins une caisse 20, en zone de dépose. Grâce à l'invention, le dispositif de positionnement 1 peut facilement être adapté à toutes les configurations d'encaissage.

Les produits 3 traités simultanément par le dispositif de préhension 17 peuvent être déposés dans plusieurs caisses 20 simultanément, ces caisses 20 étant éventuellement de configurations différentes entre elles, par exemple avec des croisillons ou espaceurs différents à chaque fois. Le dispositif de positionnement 1 assure alors la versatilité nécessaire pour s'adapter aussi à ce genre de situation, puisque chaque bloc 5 peut être réglé indépendamment, et qu'il peut alors être tenu compte, notamment, des configurations attendues dans chaque caisse 20, mais aussi de l'espace plus important à prévoir entre les lots dédiés à des caisses 20 différentes, dû aux épaisseurs provoquées par les parois des caisses 20 les unes contre les autres.

Les figures 3 et 4 se rattachent à une même réalisation, et représentent les deux états possibles en fonction de la position des blocs contre l'une ou l'autre des butées 7. La figure 4 montre en particulier que le déplacement des deux blocs 5 n'est pas forcément de même amplitude, ce qui provient tout simplement d'un réglage différent entre une butée 5 d'une unité de manoeuvre 4 par rapport à la butée 5 correspondante pour l'autre unité de manoeuvre 4.

Grâce à l'invention, il est ainsi possible de régler de façon très simple et néanmoins efficace, un dispositif de positionnement qui a pour but de changer la position de produits 3 par rapport à une structure support 2 qui les manoeuvre au moins temporairement. En outre, les réglages possibles, en termes d'amplitude de mouvement pour chaque produit, de position initiale et position finale, sont très nombreux.

Bien que la description ci-dessus se base sur des modes de réalisations particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Dispositif de positionnement (1) pour saisir et modifier la position, au sein d'une structure support (2) qu'il comprend, d'un ensemble de produits (3) pour une ligne industrielle traitant ces produits (3) à la chaîne, dispositif comprenant, pour au moins un produit (3) à déplacer dans ladite structure support (2), une unité de manoeuvre (4) comportant, d'une part, un bloc (5) mobile interagissant avec ledit au moins un produit (3), et, d'autre part, un actionneur (6) définissant la position dudit bloc (5),
dispositif **caractérisé en ce que**
la au moins une unité de manoeuvre (4) comprend, en outre, une paire de butées (7) de réglage entre lesquelles le bloc (5) circule, sous l'effet de l'actionneur (6), de sorte à déplacer le au moins un produit (3) concerné.

2. Dispositif selon la revendication 1, **caractérisé en ce que**
la structure support (2) comporte, d'une part, des premières glissières (8) sur lesquelles le bloc (5) de la au moins une unité de manoeuvre (4) est monté mobile entre deux positions délimitées par l'une des butées (7) de réglage à chaque fois, et, d'autre part, des deuxièmes glissières (9) sur lesquelles est montée la paire de butées (7) correspondante.

3. Dispositif selon la revendication 2, **caractérisé en ce que**
il comprend une pluralité d'unités de manoeuvre (4), pour pouvoir traiter simultanément plusieurs produits (3), chaque unité de manoeuvre (4) étant dédiée au déplacement d'au moins un produit (3), les blocs (5) étant tous montés sur les premières glissières (8), les paires de butées (7) de réglage étant toutes montées sur les deuxièmes glissières (9).

4. Dispositif selon l'une quelconque des revendications 1 à 3, où
la au moins une unité de manoeuvre (4) comprend, en outre, pour chaque butée (7), un bloqueur (11), contrôlant le verrouillage en position de ladite butée (7).

5. Dispositif selon l'une quelconque des revendications 1 à 4, où
l'actionneur (6) de la au moins une unité de manoeuvre (4) prend la forme d'un vérin à cylindre (12) et piston (13), bistable entre deux positions extrêmes de piston (13) sorti ou piston (13) rentré, qui sont définies par les obstacles qui s'opposent au mouvement du piston (13).

6. Dispositif selon l'une quelconque des revendications 1 à 5, où
l'actionneur (6) de la au moins une unité de manoeuvre (4) prend la forme d'un vérin à cylindre (12) et piston (13), l'un parmi le cylindre (12) et le piston (13) étant assujetti au bloc (5) correspondant, l'autre étant assujetti à l'une des deux butées (7).

7. Dispositif selon l'une quelconque des revendications 1 à 6, **caractérisé en ce que**
il comprend, en outre, un moyen de réglage (14) pour déplacer au moins une butée (7) de la paire de butées (7) de l'au moins une unité de manoeuvre (4).

8. Dispositif de préhension (17) pour prendre simultanément plusieurs produits (3) dans au moins une colonne convoyée dans une ligne industrielle et les déposer ensuite pour un conditionnement en fardeau ou par encaissage dans un récipient du type caisse (20),
**caractérisé en ce que**
il comprend un dispositif de positionnement (1) selon l'une quelconque des revendications 1 à 7, prévu pour être monté sur un manipulateur (18) qui déplace le dispositif de préhension (17) entre une zone de prise, où les produits (3) sont pris, et une zone de dépose, où ils sont déposés après avoir été repositionnés au sein du dispositif de positionnement (1), le bloc (5) mobile de la au moins une unité de manoeuvre (4) portant au moins un moyen de préhension (10) pour saisir au moins un produit (3).

9. Procédé pour repositionner des produits (3) dans une ligne industrielle traitant ces produits (3) à la chaîne, à l'aide d'un dispositif de positionnement (1) selon l'une quelconque des revendications 1 à 7, procédé **caractérisé en ce que**
le déplacement des produits (3) au sein du dispositif de positionnement (17) s'effectue par le déplacement, le long de premières glissières (8) et entre deux butées (7) réglables, d'au moins un bloc (5) dédié à coopérer avec au moins un produit (3).

10. Procédé selon la revendication 9, **caractérisé en ce que**
il comprend, en outre, une étape préliminaire de réglage consistant essentiellement à modifier la position, le long de deuxièmes glissières (9) sur lesquelles elle est montée, d'au moins une butée (7) d'au moins une paire de butées (7) entre lesquelles évolue un ou le bloc (5).

11. Procédé selon la revendication 10, où
le réglage revient à déverrouiller en position la butée (7) à régler, puis à la repositionner le long des deuxièmes glissières (9), puis à la verrouiller à nouveau en position.

12. Procédé de transfert de produits (3) au sein d'une ligne de traitement où ils sont conditionnés, et ce à l'aide d'un dispositif de préhension (17) selon la revendication 8, lesdits produits (3) étant pris dans une zone de prise et déposés dans une zone de dépose, procédé de transfert **caractérisé en ce que**
il comprend un procédé de repositionnement selon l'une quelconque des revendications 9 à 11, le déplacement des produits (3) au sein du dispositif de positionnement (1) étant mis en oeuvre lors du transfert des produits (3) depuis la zone de prise jusqu'à la zone de dépose.
